# EUROPÄISCHE PATENTSCHRIFT

(11) **EP 2 182 573 B1**
(45) Veröffentlichungstag und Bekanntmachung des Hinweises auf die Patenterteilung: **30.11.2011**
(21) Anmeldenummer: 09002931.5
(22) Anmeldetag: 02.03.2009
(51) Int. Cl.: H01M 8/24, H01M 8/04

(54) **PEM Brennstoffzellenstack**
PEM fuel cell stack
Piles de cellules de combustible PEM

(30) Priorität: 31.10.2008 DE 102008052531
(43) Veröffentlichungstag der Anmeldung: 05.05.2010
(73) Patentinhaber: inhouse engineering GmbH, 12555 Berlin (DE)
(72) Erfinder: Beckmann, Frank, Dipl.Ing. (FH), 12587 Berlin (DE); Hildebrandt, Christoph,Dipl.Ing. (FH), 16761 Henningsdorf (DE); Arnold,Jürgen, Dr.-Ing., 10318 Berlin (DE); Theuring, Steffen, Dipl.Ing., 10318 Berlin (DE); Schneider, Bernd, 16321 Bernau (DE)
(74) Vertreter: Reimann, Wolfgang

(56) Entgegenhaltungen:
- WO-A2-2005/056735
- US-B1- 6 395 415
- US-B1- 6 989 651

## Beschreibung

Die Erfindung betrifft einen Brennstoffzellenstack mit integrierten Multimediaanschlusssteckern, einer mechatronischen Koppeleinheit mit integrierten Sensoren und Aktoren, einem Formstück in den Manifolds und einem Stapel von Einzelzellen, die jeweils aus einer Polymer-Membran-Elektrodeneinheit, beidseitig angeordneten Bipolarplatten und Dichtungen und aus speziell ausgeformten Seitenblechen bestehen, die zur Verspannung des Stacks und zur Aufnahme einer Eihzelzellspannungsmesseinrichtung dienen. Der Brennstoffzellenstack ist von einem optimierten Medienführungs- und Medienverteilsystem für Luft, Reformat und Kühlwasser durchzogen, das an einem eingangsseitigen Multimediastecker beginnt, sich, über die mechatronische Koppeleinheit zu den eingangsseitigen Manifolds mit dem Formstück über die Gasverteiler bis zu den Flowfields fortsetzt und von dort über die ausgangsseitigenGasverteiler, die Manifolds mit dem Formstück und über die ausgangsseitige mechatronische Koppeleinheit zu dem ausgangsseitigen Multimediastecker geht *und welches in seiner Gesamtheit das Medienkanalsystem des PEM Stack darstellt.*

PEM Brennstoffzellen sind als dezentrale Energieversorger sowohl von elektrischer Energie als auch Wärmeenergie insbesondere wegen ihres hohen elektrischen Wirkungsgrades, der bedarfsabhängigen Steuerungsmöglichkeit und der örtlichen Nutzung der Abwärme für die Stabilisierung der elektrischen Energiesysteme und zur Reduzierung der Umweltbelastung geeignet. Als Brennstoffe können dabei sowohl fossile Energieträger, wie Erdgas als auch erneuerbare Energieträger wie Biogas oder auch Mischungen von beiden eingesetzt werden.

Brennstoffzellensysteme mit Brennstoffzellenstacks als Herzstück, die wiederum mit Polymer-Elektronen-Membranen zur Direktumwandlung von chemischer in Elektro- und Wärmeenergie ausgestattet sind, sind bekannt und entsprechen dem Stand der Technik. Sie werden medienseitig üblicherweise über einzelne Schraub- oder Schneidklemmenverbinder und geeignete Schläuche in übergeordnete Systeme eingebunden. Sie enthalten veredelte Stromabnehmerplatten und unterschiedlich ausgeführte Manifols und Flowfields.

Entscheidende Nachteile der bekannten Systeme für stationäre Anwendungen sind vor allem die hohen Kosten für die Herstellung und den Service, die unzureichende Lebensdauer und die verbesserungsfähige Energie- und Materialeffizienz. Die Ursachen dafür sind vielfältig.
- So ergeben sich hohe Herstellungskosten, besonders durch die hohe Anzahl der Komponenten mit relativ geringem Standardisierungsgrad.
- Die Höhe der Servicekosten hängt wesentlich vom Arbeitszeitaufwand für die Fehlersuche und den Austausch von Komponenten ab.
- Bezüglich des Stackaufbaus gehören zu den Problemen konstruktionsbedingte inhomogenen Last- und Temperaturverteilungen in den Stacks,
- nichtoptimale Medienzuführungsstrukturen,
- nichtoptimale mechanische Druckverteilungen im Stack,
- zu große Bauvolumen durch unzureichende Integration von notwendigen Zusatzfunktionsbaugruppen,
- zu hoher Aufwand und Gefahrenpotentiale beim Wechseln von defekten Stacks, die in Geräten oder Gerätesystemen eingebaut sind.
- fehlende Möglichkeiten Standardbaugruppen und Bauteile ohne großen Aufwand an unterschiedliche Nutzeranforderungen anzupassen.

Aufgabe der vorliegenden Erfindung ist, PEM-Brennstoffzellenstacks so weiterzuentwickeln, dass sich diese aus wenigen kostengünstigen Komponenten einfach herstellen und prüfen lassen, die Servicekosten minimal sind und eine möglichst hohe Lebensdauer und Verfügbarkeit in Verbindung mit dem übergeordneten System erreicht wird.

Diese erfindungsgemäße Aufgabenstellung wird erreicht durch eine Optimierung der Konstruktion der PEM-Brennstoffzellenstacks mit selbstdichtenden Steckern, durch wenige einfach montierbare mit integrierter Sensorik und Aktorik ausgestatteten kostengünstigen Modulen oder Einheiten und durch die optimierte Ausgestaltung des Medienführungs- und -verteilsystems mit dem eine hohe Homogenität der Last- und Wärmeverteilung sowie eine hohe Energie- und Materialeffizienz gewährleistet wird

Diese Aufgabe wird erfindungsgemäß nach Patentanspruch 1 gelöst.

Die Erfindung beinhaltet einen Brennstoffzellenstack, bei dem dessen Kupplung an ein übergeordnetes Gerät über Multimediaanschlussstecker am Brennstoffzellenstack und den Multimediaanschlussbuchsen auf der Geräteseite durch einfaches Reinstecken und Verriegeln erfolgt *und eine Medienkupplungsanordnung darstellt.*

Dadurch werden die für den Betrieb des Brennstoffzellenstacks erforderlichen Medienkreise für die drei Medien Luft oder Sauerstoff, für Reformat oder Wasserstoff und für die Kühlflüssigkeit gleichzeitig geschlossen. In die Multimediastecker sind je nach Ausstattung Sensoren für die Messung der wichtigsten Prozessgrößen wie Temperatur, Druck, Feuchte und Durchfluss und Aktoren wie einfache Klappen integriert. Die Messwertvorverarbeitung, -aufbereitung und lokale Steuerungsfunktionen sind in dem seitlich am Stack insbesondere an den Seitenblechen angebrachten Gehäuse integriert. Die Multimediastecker sind aus einem geeigneten Kunststoff, wie zum Beispiel PPS hergestellt. Sie bestehen aus den eigentlichen Verbindungssteckern mit Dichtungen und dem Steckergehäuse, das die Stecker und die Sensorik und Aktorik aufnimmt. Die Multimediastecker sind direkt mit der Koppeleinheit verbunden, die mit Kanälen versehen ist, über die die Durchleitung der Medien bis zu den Manifolds mit den Formstücken erfolgt. Die Koppeleinheiten umfassen beidseitig an den Stirnseiten den Stapel, der aus den Einzelzellen besteht, wobei sie an zwei Seiten mit Spannblechen verbunden sind und durch ihre Ausgestaltung als federnder Aufbau einen gleichmäßigen Druck auf den Stapel von Einzelzellen ausüben.

Problematisch ist die Versorgung des Brennstoffzellenstacks mit feuchten Gasen, welche nicht genau auf die Eintrittsbedingung konditioniert sind, was durch aufwendige Sensorik und Regeleinrichtung erreicht werden kann. Dazu beinhaltet die Erfindung eine passive sich selbst regelnde Konditionierstrecke in welcher alle in den Stack einströmenden Medien parallel geführt werden, dabei werden alle Temperaturdifferenzen ausgeglichen. Eventuell anfallendes Kondensat wird gezielt aus den nachfolgenden Manifolds über eine Kondensatabscheidevorrichtung abgeschieden.

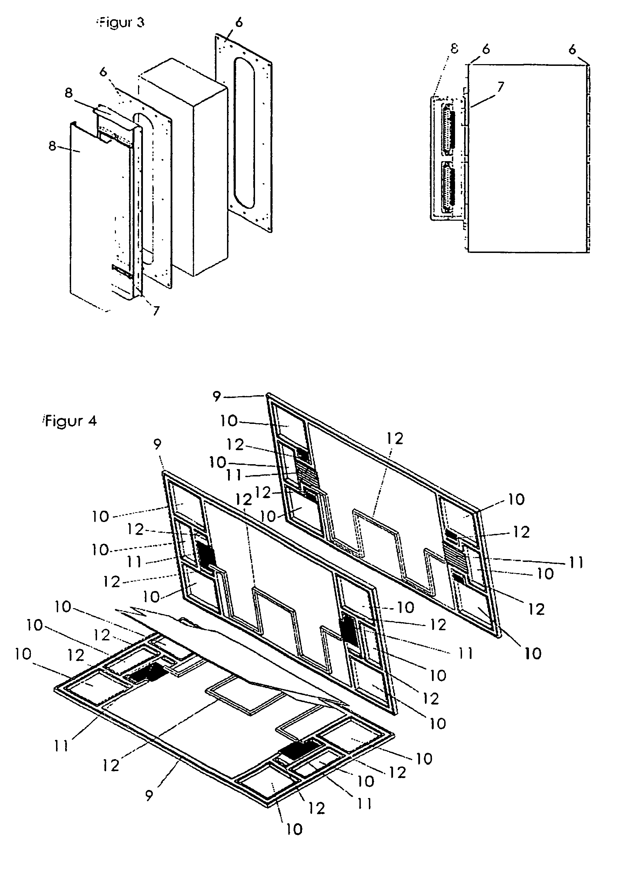

Bei bekannten Brennstoffzellenstacks besitzen die Manifolds über die Länge des Stapels der Einzelzellen aus fertigungstechnischen Gründen einen gleich bleibenden Durchmesser. Dieser Aufbau hat den Nachteil, dass er auf der Kathodenseite den laufenden Verbrauch von Sauerstoff und auf der Anodenseite den laufenden Verbrauch von Wasserstoff durch die Einzelzellen sowie die variable Druckverteilung über die Längsachse der Manifolds sowie die variable Druckverteilung nicht optimal berücksichtigt. Dadurch ergibt sich eine inhomogene Belastung der Einzellzellen-je nach der Lage über die Länge des Stacks verbunden mit einer inhomogenen Belastung und einer Reduzierung der Lebensdauer. Es gibt Lösungen, wo auf der Kathodenseite speziell ausgeformte aufwendig gespritzte und über Dichtungen angeflanschte Zuführungen angebracht sind. Diese Anordnung löst das Problem nur partiell für die Kathodenseite und hat weitere Nachteile, wie den erhöhten Fertigungsaufwand sowie zusätzliche Dichtungsprobleme. In der vorliegenden Erfindung erfolgt die optimale Manifoldgrößenanpassung auf der Kathodenseite und der Anodenseite über eingeführte konische Formstücke. Die genaue Ausführung der Formstücke erfolgt auf der Basis vorher durchgeführter Simulationsrechnungen, mit deren Hilfe für den jeweiligen Stacktyp die optimale Formgebung bestimmt wird. Diese Formstücke dienen in einigen Ausführungen gleichzeitig der Justierung der Einzelzellen bei der Montage der Stacks. Durch diese Lösung ist es möglich standardisierte Flowfields mit gleichbleibenden Manifoldabmessungen zu verwenden und gleichzeitig eine optimale Anpassung der Medienführung an die Strömungsvolumina mit optimierter Druckverteilung vorzunehmen. Aus umfangreichen Messungen und Dauerversuchen hat sich ergeben, dass es bei den Flowfields unter anderem darauf ankommt, dass alle Stege und Kanäle von der Anoden- und Kathodenseite genau übereinander liegen und keine Kreuzungen bei der Kanalführung auftreten. Dadurch wird die mechanische, thermische und elektrische Belastung der Membran-Elektroden-Anordnungen homogenisiert und minimiert. Figur 4 zeigt die Realisierung dieser Anforderungen. Aus dem gleichen Bild ist ersichtlich, wie über speziell ausgestaltete Medienverteiler auf den Flowfields erreicht wird, dass alle Medien an der gleichen Stelle im Flowfield ein- und austreten. Dadurch kann über gleichmäßige Erwärmung der Medien das anfallende Wasser in den Gaskanälen verdampft werden und Austrocknungen und Flutungen der Membran-Elektroden-Anordnungen oder der Kanäle werden verhindert.

Die erfindungsgemäßen Brennstoffzellenstacks zeichnen sich durch eine Reihe von Vorteilen aus. Die Servicekosten und Prüfkosten sind gegenüber bekannten Lösungen wesentlich dadurch reduziert, dass die Stacks über Multimediastecker sowohl im kalten als auch im heißen Zustand durch einfaches Stecken und Arretieren mit den übergeordneten Geräten gasdicht und mechanisch lösbar verbunden werden können. Durch die feste Anordnung der einzelnen Steckerteile ist eine Verwechselung der Anschlüsse unmöglich. Durch die integrierte Sensorik und Aktorik in den Kupplungen und die lokale Messwertvorverarbeitung und lokale Steuerung ist eine optimale Justierung der Messstellen, ein einfacher kostengünstiger Aufbau und eine einfache Montage gesichert. Für die Fertigung wird ein erhöhter Standardisierungsgrad dadurch erreicht, dass das Koppelmodul aus Standardeinzelteilen aufgebaut ist und die Bipolarplatten alle eine einheitliche Grundstruktur haben, die durch ein konisches Formstück in den Manifolds für die jeweilige Anwendung optimiert wird. Weiterhin wird durch die homogene kreuzungsfreie Kanalführung, bei der alle Medien im aktiven Zellbereich an der gleichen Stelle in das Flowfield ein- und austreten und die Stege und Kanäle der Kathoden- und Anodenseite direkt übereinander liegen, eine günstige Verteilung der Beanspruchung erreicht.

Anhand Fig. 1 bis 7 werden Ausführungsbeispiele der Erfindung erläutert. Es zeigen:
Fig. 1 eine Darstellung der Multimediasteckverbindung,
Fig. 2 eine Darstellung der Multimediasteckverbindung in verbundenen Zustand,
Fig. 3 eine Darstellung der Seitenbleche mit lokaler Informationsverarbeitung und Steuerung
Fig. 4 Manifolds und Bipolarplatten
Fig. 5 ein Formstück für die Manyfolds
Fig. 6 eine Darstellung der Medienflüsse
Fig. 7 eine Darstellung der Medienkonditionierung und Kondensatabscheidung

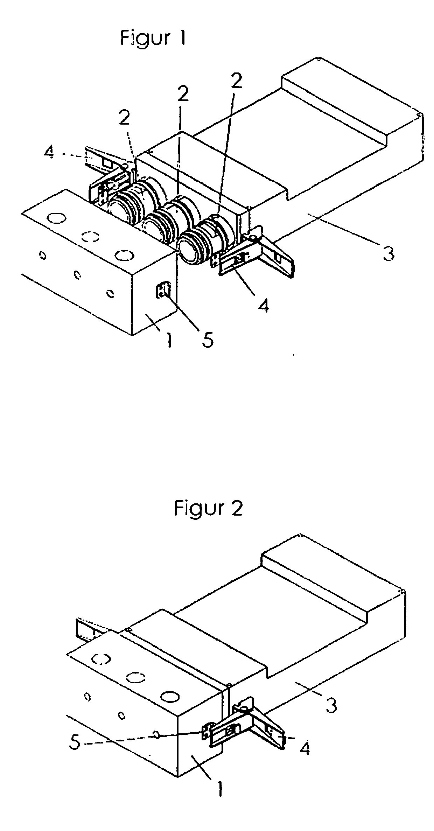

**Figur 1** zeigt den Aufbau einer Ausführung des Multimediasteckers bestehend aus dem Steckerträger (1) zur Aufnahme der einzelnen Stecker (2) und der mechatronischen Koppeleinheit (3) mit den Verschlüssen (4). In einer Ausführung ist je eine mechatronische Koppeleinheit jeweils mediendicht an beiden Enden mit dem Stack verbunden, die Verschlüsse sind seitlich an der Koppeleinheit befestigt und die Stecker stecken je nach Ausführung in der Koppeleinheit oder dem Steckerträger. Die Steckerträger sind fest mit dem übergeordneten Gehäuse verbunden und so in diesem angeordnet, dass der Stack mit den Koppeleinheiten einfach beidseitig gesteckt werden kann. Mit Hilfe der Verschlüsse (4) und der Verschlussgegenstücke (5) wird der Stack dann dicht und mechanisch fest an das übergeordnete System angeflanscht.

**Figur 2** zeigt die Anordnung im angeflanschten Zustand. Die zum Beispiel als Dreifachstecker ausgeführten Multimediastecker ermöglichen die gleichzeitige Medienkupplung und Medienentkupplung sowohl eingangs- wie ausgangsseitig in einem Steck- oder Kuppelarbeitsschritt. Diese Bauart ermöglicht auch ein quasi" hot plug- and play" für den Stack in der Anlage, das heißt die Kupplung kann auch im heißen Betriebszustand erfolgen, wodurch viel Zeit bei einem Stackwechsel gespart wird. Die erforderlichen Sensoren für die Medienzustandsgrößen Temperatur, Druck, Durchfluss sowie einfache Stellglieder wie Absperrventile sind je nach Ausführung in die Koppeleinheit oder den Steckerträger integriert. Dadurch werden die Meßwerte besonders funktionsgerecht und unverfälscht erfasst.

Die Verspannung des Stacks mit den Koppeleinheiten und die Integration der lokalen Informationsverarbeitung und Steuerung (7) erfolgt, wie in **Figur 3** dargestellt über nach innen isolierte Seitenbleche (6) für die Aufnahme der lokalen Informationsverarbeitung und Steuerung (7) und Verbindungsschrauben zur Verbindung der Seitenbleche mit den Koppeleinheiten sowie Befestigungen zur Aufnahme der lokalen Informationsverarbeitung und Steuerung (7) und des Gehäuses (8) für die mechanische und elektromagnetische Abschirmung. Das Material der Seitenbleche ist ein leitendes nach innen isoliertes Metall, wie zum Beispiel Stahl oder ein hochfester Verbundwerkstoff, wie zum Beispiel ein Kohlefaser verstärkter Kunststoff.

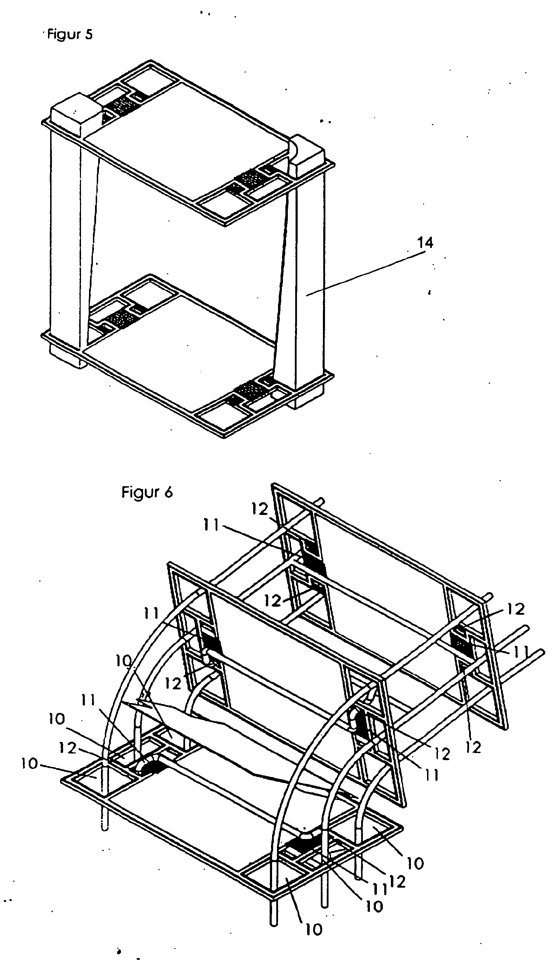

**Figur 4** zeigt die in den Bipolarplatten integrierten Manifolds (10), die aus Gründen der Standardisierung der Herstellungsprozesse in jeder Platte gleich ausgeführt sind. Zur Anpassung und Optimierung der Medienflüsse wird in die Manifolds jeweils ein für die jeweiligen Betriebsbedingungen optimiertes Anpassstück zum Beispiel ein Konus eingeschoben, wie in **Figur 5** *mit dem Formstück (14)* dargestellt. Dadurch ist es möglich sowohl einen hohen Standardisierungsgrad der Bipolarplatten, als auch eine optimale Anpassung der Manifoldkanalgrößen an die jeweils ortsabhängigen Medienzustände zu erreichen.

Aus **Figur 4** ist weiterhin ersichtlich, wie in der dargestellten Ausführung über Rangierfelder (11) erreicht wird, dass alle Medien an der gleichen Stelle ein und auftreten und so gesichert wird, dass über eine hohe Temperaturspreizung des Kühlwassers das entstehende Wasser in den Gaskanälen verdampft und Austrocknungen und Flutungen vermieden werden. Zu den Rangierfeldern (11) gehören auch die Mediendurchbrüche (12), durch deren Gestaltung und Einbeziehung in das Rangierfeld (11) zusätzliche, Kanalabdeckungen vermieden werden.

**Figur 6** zeigt in einer Ausführung den Medienfluss unter Einbeziehung der Durchbrüche.

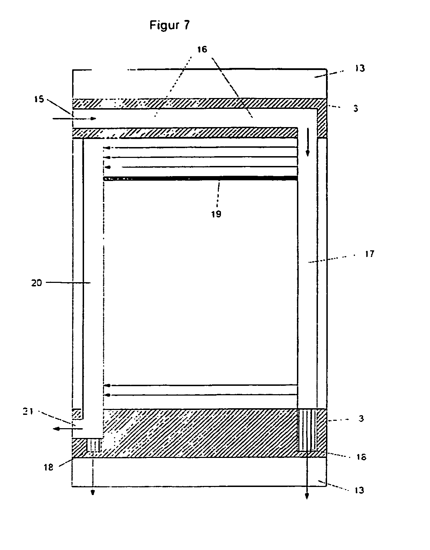

**Figur 7** zeigt das Prinzip des Medienflusses im Stack, wobei die Medien alle in den Medieneingang (15) in die mechatronische Koppeleinheit (3) eintreten und über die Konditionierstrecke (16) in das Eingangsmanifold (17) gelangen. Hier kann über eine Kondensatabscheidung (18) das flüssige,Wasser abgeleitet werden. Die Zellen (19), vor allem die zu unterst gelegenen, werden somit nicht mit flüssigem Wasser belastet. Eine Abscheidung aus dem Ausgangsmanifold (20) kann ebenso über einen Kondensatabscheider (18) erfolgen.

### Bezugszeichen

- 1: Steckerträger
- 2: Stecker
- 3: mechatronische Koppeleinheit
- 4: Verschlüsse
- 5: Verschlussgegenstücke
- 6: Seitenbleche
- 7: lokale Informationsverarbeitung und Steuerung
- 8: Gehäuse für die lokale Informationsverarbeitung und Steuerung
- 9: Bipolarplatte
- 10: Manifold
- 11: Rangierfeld
- 12: Mediendurchbruch
- 13: Endplatte
- 14: Formstück
- 15: Medieneingang
- 16: Konditionierstrecke
- 17: Eingangsmanifold
- 18: Kondensatabscheidung
- 19: Zelle
- 20: Ausgangsmanifold
- 21: Medienausgang

## Patentansprüche

1. Brennstoffzellenstacksystem, **gekennzeichnet durch**
- eine Multimediakupplungsanordnung, welche an jedem Stackende aus einem Steckerträger (1), Steckern (2), einer mechatronischen Köppeleinheit (3) und Verschlüssen (4) mit Verschlussgegenstücken (5) besteht, wobei die Steckerträger mit dem übergeordneten System verbunden sind und die Stecker so in die Koppeleinheit oder den Steckerträger integriert sind, dass der Stack einfach beidseitig gleichzeitig mit allen drei Medienkanälen Ein- und Ausgangsseitig verbunden wird und eine Verriegelung und Verspannung über die federnden Verschlüsse und Verschlussgegenstücke erfolgt;
- eine mechatronische Spann- und Aufnahmevorrichtung bestehend aus zwei speziell ausgeformten Seitenblechen (6), mit denen die Einzelzellen auf eine vorbestimmte Länge gemeinsam verspannt werden und einer lokaler Informationsverarbeitung und Steuerung (7) und einem Gehäuse (8) für die Abschirmung der lokalen Informationsverarbeitung und Steuerung (7);
- Bipolarplatten die standardisierungsfreundlich ausgeformt sind und deshalb alle gleiche Manifolds enthalten, die aber über die gesamte Länge des Stacks über vorausbestimmte Formstücke (14) an die jeweils optimalen Betriebsbedingungen angepasst werden;
- Bipolarplatten, die spezielle Rangierfelder (11) und Mediendurchbrüche (12) enthalten, wodurch alle Medien der Kathodenseite, Anodenseite und Kühlseite an derselben Stelle in das Flowfield einströmen bzw. ausströmen sowie über das Flowfield alle Kanäle kreuzungsfrei geführt werden.
- *Sensoren, die in der mechatronische Koppeleinheit* (3) *oder den Steckerträger (1) integriert sind, mit denen die Medienzustandsgrößen Temperatur, Druck, Feuchte, Durchfluss örtlich optimal gemessen werden können.*

2. Brennstoffzellenstacksystem nach Anspruch 1, **dadurch gekennzeichnet, dass** in die mechatronische Koppeleinheit (3) oder den Steckerträger (1) Klappen oder andere Aktoren integriert sind, die ein Stackwechsel im laufenden Betrieb des Gesamtsystems unterstützen.

3. Brennstoffzellenstacksystem nach Anspruch 1, **dadurch gekennzeichnet, dass** die einströmenden Medien passiv und selbstregulierend sich über eine Konditionierstrecke (16) an die Stacktemperatur angleichen, anfallendes Kondensat über Abscheider (18) abgeleitet wird.

4. Brennstoffzellenstacksystem nach Anspruch 1, **dadurch gekennzeichnet, dass** die lokale Informationsverarbeitung und Steuerung (7) in das Stacksystem integriert ist, wobei der Datenaustausch mit der übergeordneten Steuerung des Gesamtsystems über einen am Stack untergebrachten Stecker erfolgt, der mechatronischer Funktionsträger der Kommunikation mit dem Gesamtsystem ist.

## Claims

1. Fuel cell stack system **characterized by**
- a multimedia coupling arrangement, which is comprised of a plug holder (1), plugs (2), a mechatronic coupling unit (3), and caps (4) with cap counterparts (5) at each end of the stack, whereby the plug holder is connected with the superordinate system and the plugs are integrated into the coupling unit or the plug holders in a manner that the stack is connected simply on both sides simultaneously with all three media channels on the input and output side and a lock and tension is the result of the spring closures and closure counterparts;
- a mechatronic tension and holding device consisting of two specially designed side plates (6), with which the single cells are tensioned to a predetermined length and a local information process and control (7) and an enclosure (8) for shielding the local information processing and control (7).
- bipolar plates formed standardization friendly and therefore, have all the same manifolds, which are adjusted to the perfect operating conditions over the entire length of the stack by predetermined formed parts (14)
- bipolar plates comprised of special patch bays (11) and media openings (12), whereby all media of the cathode side, the anode side, and the cooling side flow in and out of the flow field at the very same point and are guided by the flow field to all channels without any crossing.
- Sensors are integrated into the mechatronic coupling unit (3) or the plug holder (1), by which the media state variables temperature, pressure, humidity, and flow can be perfectly measured locally.

2. Fuel cell stack system according to claim 1, **characterized by** the integration of dampers, or other actuators, into the mechatronic coupling unit (3) or the plug holder (1), which support changing the stack during operations of the entire system.

3. Fuel cell stack system according to claim 1, **characterized by** the inflowing media adjusting in a passive and self-regulating manner to the stack temperature via a conditioning distance (16), the resulting condensation is diverted by a separator (18).

4. Fuel cell stack system according to claim 1, **characterized by** the integration of the local information process and control (7) into the stack system, whereby the data is exchanged with the superordinated control of the entire system by a plug integrated into the stack, which is the mechatronic function owner of the communication with the entire system.

## Revendications

1. Système d'empilement à cellule électrochimique qui se **caractérise par**
- un agencement d'embrayage multimédia composé à chaque extrémité enfichable d'un support de connecteur (1), de connecteurs (2) d'une unité de couplage mécatronique (3) et d'obturateurs (4) avec contreparties (5). Le support de connecteur est connecté au système maître et ainsi, les connecteurs sont intégrés à l'unité de couplage ou au support de connecteur de telle sorte que le raccord peut être connecté simplement des deux côtés simultanément avec les trois canaux médiatiques côté entrée et côté sortie et un verrouillage et une mise sous tension au-dessus des obturateurs sur ressort et des contreparties a lieu.
- un dispositif de serrage et de réception mécatronique composé de deux parois latérales (6) spécialement formées avec lesquelles chacune des cellules sont mises sous tension ensemble sur une longueur prédéterminée et d'un traitement250 local des informations et d'une commande (7) ainsi que d'un boîtier (8) pour la protection du traitement local des informations et de la commande (7).
- des plaques bipolaires formées pour une meilleure normalisation et qui, pour cette raison, contiennent toutes les mêmes manifolds mais qui sont ajustées sur toute la longueur du stack par le biais de pièces façonnées (14) aux conditions d'exploitation optimales correspondantes.
- des plaques bipolaires contenant des panneaux de rangement (11) et des ruptures de conduites (12) à travers lesquels tous les médias du côté cathodique, anodique et du côté refroidissement affluent ou se dégagent au même endroit dans le champ de flux et tous les canaux circulent dans le champ de flux sans croisement.
- des sondes intégrées dans l'unité de couplage mécatronique (3) ou le support de connecteur (1) avec lesquelles les valeurs d'état des médias comme la température, la pression, l'humidité et le débit peuvent être mesurées de manière optimale sur place.

2. Le système de connexion à cellule électrochimique selon la revendication 1, se **caractérise par le fait que** des clapets ou d'autres acteurs sont intégrés dans l'unité de couplage mécatronique (3) ou le support de connecteur (1). Ils facilitent le changement de connecteur du système complet en cours de fonctionnement.

3. Le système de connexion à cellule électrochimique selon la revendication 1, se **caractérise par le fait que** les fluides affluant de manière passive et à autorégulation s'ajustent à la température des connecteurs par le biais d'une voie de conditionnement (16), le condensat généré est reconduit par le biais d'un séparateur (18).

4. Le système de connexion à cellule électrochimique selon la revendication 1, se **caractérise par le fait que** le traitement local des informations et la commande (7) sont intégrés au système de connexion. L'échange des données s'effectue avec la commande directrice du système complet par le biais d'une fiche installée sur le connecteur qui est le support mécatronique des fonctions pour la communication avec le système complet.
